# EUROPÄISCHE PATENTSCHRIFT

(11) **EP 2 575 409 B1**
(45) Veröffentlichungstag und Bekanntmachung des Hinweises auf die Patenterteilung: **09.12.2015**
(21) Anmeldenummer: 12006808.5
(22) Anmeldetag: 28.09.2012
(51) Int. Cl.: H05B 3/12, H05B 3/56, B60S 1/48

(54) **Heizkordel sowie Heizvorrichtung mit einer Heizkordel**
Heating cords and heating device with a heating cord
Cordon de chauffage ainsi que dispositif de chauffage avec un cordon de chauffage

(30) Priorität: 29.09.2011 DE 102011114501
(43) Veröffentlichungstag der Anmeldung: 03.04.2013
(73) Patentinhaber: LEONI Kabel Holding GmbH, 90402 Nürnberg (DE)
(72) Erfinder: Dreiner, Michael, 51688 Wipperfürth (DE)
(74) Vertreter: FDST Patentanwälte

(56) Entgegenhaltungen:
- EP-A1- 1 958 832
- WO-A1-2009/063980
- DE-A1- 2 909 220
- DE-A1- 3 636 738
- DE-A1- 10 043 879
- DE-C- 820 943
- FR-A1- 2 922 843
- US-A- 3 646 322
- US-A- 4 194 536

## Beschreibung

Die Erfindung betrifft eine Heizkordel mit den Merkmalen des Oberbegriffs des Anspruchs 1 sowie eine Heizvorrichtung mit einer solchen Heizkordel.

Eine derartige Heizkordel ist aus der US 3 646 322 A zu entnehmen.

Derartige Heizkordeln werden insbesondere zur Beheizung eines Wischwassersystems umfassend einen Tank, eine Verschlauchung sowie zumindest einen Wischerarm mit einem Wischblatt im Automobil eingesetzt. Hierbei muss die Heizleitung einer hohen Anzahl an Wechselbiegezyklen im Wischerarm standhalten. Ein Aufbau einer Heizkordel mit gewendelten Widerstandsdrähten auf einem Glasseidenträger ist möglich. Durch Wendeln der Widerstandsdrähte lassen sich hohe Widerstandswerte unter Verwendung dünner Drähte durch eine Erhöhung der gestreckten Länge pro Meter realisieren. Die mechanisch empfindlichen Drähte werden durch die Trägerkordel unterstützt.

Bei derartigen Heizkordeln besteht das Problem, dass der gewendelte Widerstandsdraht mit Glasseide als Trägerfaden vor der Weiterverarbeitung in thermischen Verarbeitungsprozessen, im so genannten Entschlichtungsverfahren thermisch vorbehandelt werden muss. Beim Entschlichten wird die sogenannte Schlichte von der Glasseide durch Verdampfen entfernt. Die Schlichte macht die Glasseide verarbeitbar und schützt die Fasern. Sie besteht meist aus Maische, Stärke und Alkohol. Diese verdampft ab 200°C.

Bei der thermischen Behandlung wirken sich die Temperaturen negativ auf die Widerstandsdrähte und die Wechselbiegefestigkeit der Glasseide aus. Die Einzelfilamente der Glasseide werden durch das Entfernen der Schlichte abriebanfällig und reiben sich bei Wechselbiegebeanspruchung gegenseitig auf. Die unbeschichteten Widerstandsdrähte bilden eine Oxidschicht.

Aus der US 3 646 322 A ist ein Widerstandsheizelement zu entnehmen, bei dem um ein zentrales Trägerelement Heizdrähte gewickelt sind. Es werden dabei Zonen mit unterschiedlicher Heizleistung ausgebildet.

Aus der US 4 194 536 A ist ein Element zur Beheizung eines Schlauchs zu entnehmen, bei welchem um den Schlauch Heizdrähte gewickelt sind. Aus der DE 36 36 738 A1 ist schließlich ein Heizelement bestehend aus mehreren isolierten Leitern zu entnehmen, wobei die isolierte Leiter jeweils von einem Heizdraht umgeben sind und die Isolierung bereichsweise unterbrochen ist, sodass sich Kontaktstellen zwischen Heizdraht und den Leitern ausbilden.

Aus der WO 2009/063980 A1 ist wiederum ein beheizbarer Schlauch zu entnehmen, bei dem um den Schlauch eine Heizwendel gewickelt ist. Aus der DE 820 943 C ist ein Heizkabel zu entnehmen, bei dem ein zentraler Träger von einem Heizdraht umwickelt ist, wobei zur Ausbildung von unterschiedlich starken Heizzonen der Wickelabstand variiert.

Ausgehend hiervon liegt der Erfindung die Aufgabe zugrunde, eine verbesserte Heizkordel anzugeben.

Die Aufgabe wird gemäß der Erfindung gelöst durch eine Heizkordel mit den Merkmalen des Anspruchs 1. Die Heizkordel umfasst eine Trägerkordel sowie ein darum gewickeltes Widerstandselement, wobei die Trägerkordel aus insbesondere einem Polytetrafluorethylen (PTFE) und einem sogenannten expandierten Polytetrafluorethylen ausgebildet ist. Unter expandiertes PTFE wird allgemein ein PTFE verstanden, bei dem aufgrund spezieller Maßnahmen während des Verarbeitungsprozesses die einzelnen Molekülfasern in einer vorgegebenen Richtung orientiert sind. Dadurch werden verbesserte mechanische Eigenschaften erzielt, die insbesondere für die Verwendung bei einer Heizkordel im beabsichtigten Anwendungszweck von besonderem Vorteil ist. Durch den Verzicht auf Glasseide als Material für die Trägerkordel ist die bei Glasseide erforderliche aufwendige Nach bearbeitung, nämlich die Entschlichtung und die damit einhergehende Temperaturbehandlung nicht erforderlich. Vielmehr wird das Widerstandselement unmittelbar auf die PTFE-Trägerkordel gewickelt, ohne dass noch eine thermische Nachbehandlung vorgenommen wird.

Die Verwendung von PTFE hat darüber hinaus den Vorteil einer im Vergleich zur Glasseide verbesserten Temperaturbeständigkeit. PTFE behält bis etwa 300°C seine Struktur, wohingegen Glasseide bereits ab etwa 200°C seine Struktur ändert.

Insgesamt wird daher sowohl das Herstellverfahren vereinfacht als auch die Eigenschaften verbessert. Insbesondere zeigt die PTFE-Trägerkordel nämlich auch eine höhere Wechselbiegefestigkeit und im Vergleich zu einer Trägerkordel aus Glasseide auch verbesserte Gleiteigenschaften.

Als Trägerkordel wird dabei eine Trägerkordel aus einem gewickelten Band aus expandiertem PTFE verwendet. Zur Herstellung wird dabei derart vorgegangen, dass das PTFE-Band, welches typischerweise eine Dicke lediglich im Bereich von 80 µm - 100 µm und eine Breite beispielsweise im Bereich von 8 bis 15 mm aufweist, um seine Längsachse verdreht wird, so dass sich die Trägerkordel ausbildet. Die derart ausgebildete Trägerkordel zeigt daher durch das Verdrehen des Bandes eine Wendelsteigung und damit eine Schlaglänge. Die Eigenschaften der Trägerkordel können bei einem PTFE-Band in vielfältiger Weise variiert werden, um die gewünschten Eigenschaften, wie beispielsweise Wechselbiegefestigkeit oder auch Durchmesser und damit Festigkeit einzustellen. Hierzu kann zum Einen die Schlaglänge variiert werden oder auch die Dicke sowie Breite des PTFE-Bands im Ausgangszustand.

Das Widerstandselement ist dabei üblicherweise gebildet aus mehreren unmittelbar nebeneinander anliegend angeordneten Widerstandsdrähten, die um die Trägerkordel gewickelt sind. Bei den Widerstandsdrähten handelt es sich um sehr feine Einzeldrähte. Ihr Durchmesser ist um ein vielfaches kleiner als der Durchmesser der Trägerkordel/Heizkordel.

Aufgrund des um die Trägerkordel gewickelten Widerstandselements weist dieses auch eine vorgegebene Schlaglänge auf. Diese liegt vorzugsweise im Bereich zwischen 1 bis 7 mm und insbesondere bei etwa 2,5 mm +/- 1 mm. Die Heizleistung bzw. der Widerstandswert pro Längeneinheit der Heizkordel lässt sich wiederum durch Variation der Wickelsteigung, Variation des Außendurchmessers der Trägerkordel, durch das verwendete Leitermaterial, durch die Anzahl der Widerstandsdrähte sowie durch Variation des Drahtdurchmesser der einzelnen Widerstandsdrähte einstellen. Insgesamt besteht also daher durch die Kombination eines Trägerbandes aus verdrehtem PTFE-Band mit darum gewickelten Widerstandsdrähten eine hohe Variationsmöglichkeit und damit Anpassungsmöglichkeit an verschiedene Anforderungen. Gleichzeitig ist die Herstellung gegenüber einer Heizkordel mit einem Trägerfaden aus Glasseide vereinfacht und die Eigenschaften sind verbessert.

Im Hinblick auf die hohe Wechselbiegefestigkeit sind einander benachbarte Wendelabschnitte des Widerstandselements zueinander um einen Wickelabstand beanstandet. Der Wickelabstand ist dabei um ein vielfaches breiter als die Breite des Widerstandselements. Das Widerstandselement setzt sich beispielsweise aus drei einzelnen Widerstandsdrähten zusammen und weist daher insgesamt eine Breite lediglich von einem Bruchteil eines Millimeters auf. Die Breite des Widerstandselements ist daher im Vergleich zu der Schlaglänge von etwa 3 bis 7 mm vernachlässigbar. Entsprechend liegt der Wickelabstand auch im Bereich der Schlaglänge, also vorzugsweise im Bereich von etwa 1 bis 7 mm und insbesondere im Bereich von 2,5 mm +/- 1 mm. In zweckdienlicher Weiterbildung ist dabei vorgesehen, dass Wickelabstand in Längsrichtung variiert, also vorzugsweise in einem Teilbereich einen verringerten Wickelabstand aufweist. Dieser Teilbereich dient insbesondere als Kontaktierungsbereich, in dem die Heizkordel zum Anschluss an eine Versorgungsleitung mit einem Kontaktelement verbunden ist. In diesem Teilbereich ist daher das Widerstandselement deutlich enger gewickelt, so dass hierdurch eine verbesserte Kontaktierung zum Kontaktelement erreicht ist. Dadurch ist eine verbesserte Kontaktsicherheit gegeben. Als Kontaktelement wird insbesondere ein Kontaktcrimp eingesetzt.

Zweckdienlicherweise ist der Wickelstand in diesem Teilbereich auf null oder zumindest auf nahezu Null reduziert. In dem Teilbereich bildet daher das Widerstandselement vorzugsweise einen geschlossenen, die Trägerkordel umgebenden Kontaktmantel. Die einzelnen Widerstandsdrähte liegen daher in Längsrichtung betrachtet vorzugsweise unmittelbar aneinander an, und zwar Widerstandsdrähte von benachbarten Abschnitten des Widerstandselements. Es besteht auch die Möglichkeit, dass sich die einzelnen Abschnitte des Widerstandselements in Längsrichtung betrachtet teilweise überlappen.

Bei der Heizkordel handelt es sich zweckdienlicherweise um ein Endlos-Element, also um Meterware, die erst zu Konfektionierungszwecken auf ein gewünschtes Endmaß abgelenkt wird. Um für unterschiedliche Konfektionierungslängen das gleiche Ausgangsmaterial verwenden zu können, ist in zweckdienlicher Weiterbildung die Heizkordel mit periodisch widerkehrenden Teilbereichen mit verringertem Wickelabstand ausgebildet. So ist beispielsweise vorgesehen, dass der Teilbereich mit dem verringertem Wickelabstand sich in einem Rastermaß von mehreren zehn Zentimetern bis in den Meter-Bereich (z. B. 30 cm, 50 cm oder 100 cm) wiederholt, so dass sich unterschiedliche Längen problemlos ausbilden lassen. Die Länge des Teilbereichs mit verringertem Wickelabstand und vorzugsweise mit auf null reduziertem Wickelabstand selbst liegt dabei im Bereich von etwa einigen Zentimetern, insbesondere im Bereich von 5 cm. Zwischen zwei aufeinander folgenden Teilbereichen mit verringertem Wickelabstand ist vorzugsweise ein konstanter Wickelabstand im Bereich von 1 bis 7 mm eingestellt. Der Wickelabstands wird daher lediglich nur im Teilbereich reduziert.

Im endkonfektioniertem Zustand ist in diesem Teilbereich zweckdienlicherweise ein Kontaktierungselement, insbesondere ein Kontaktcrimp angeschlagen.

Dieser Aspekt der Variation des Wickelabstands, insbesondere mit der Reduzierung des Wickelabstands bis auf 0 zur Ausbildung des Kontaktierungsbereichs 10 wird als eine eigenständige Erfindung unabhängig von der Ausbildung der Trägerkordel aus PTFE angesehen. Die Einreichung einer Teilanmeldung auf diesen Aspekt mit einer beliebigen Trägerkordel bleibt vorbehalten.

Die Heizkordel eignet sich generell für eine elektrische Heizvorrichtung, bei der es auf eine hohe Wechselbiegefestigkeit ankommt. Sie dient neben der Integration beispielsweise in textilen Flächenheizungen wie beispielsweise Sitzheizungen etc. insbesondere auch zum Einsatz bei einer Wischwasserleitung bei einem Kraftfahrzeug. Insbesondere ist dabei die Heizkordel in oder an einem Wischwasserschlauch angeordnet, so dass unmittelbar das Wischwasser beheizt werden kann. Vorzugsweise ist dabei die Heizkordel am Wischarm entlang geführt. Insbesondere ist die Heizkordel bis in unmittelbare Nähe der Austrittsdüsen für das Wischwasser geführt, um im Falle eines Einfrierens des Wischwassers ein zuverlässiges Auftauen auch in diesem Bereich zu gewährleisten.

Eine Ausführungsvariante der Erfindung wird nachfolgend anhand der Figuren näher erläutert. Dies zeigen jeweils in vereinfachten Darstellungen:
- FIG 1A: eine stark vereinfachte schematische Querschnittsdarstellung einer Trägerkordel mit darauf angebrachten Widerstandsdrähten,
- FIG 1B: eine perspektivische Seitenansicht der Heizkordel gemäß FIG 1A
- FIG 2: eine Seitenansicht einer alternativen Ausgestaltung einer Heizkordel mit variierenden Wickelabständen sowie
- FIG 3: eine Querschnittsdarstellung eines Wischwasserschlauchs mit darin angeordneter Heizkordel.

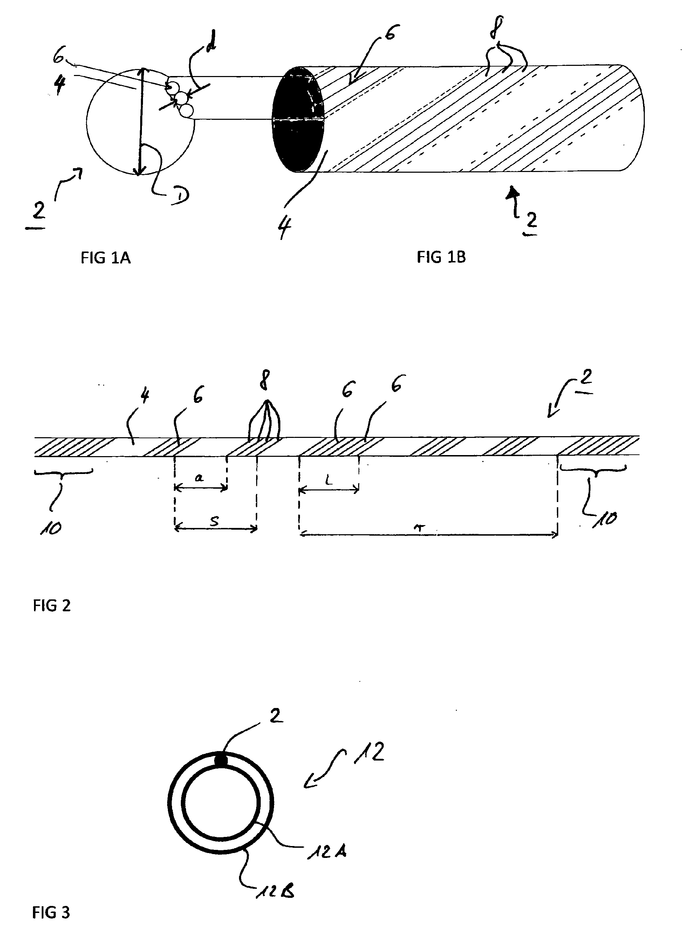

In den Figuren sind gleichwirkende Teile mit den gleichen Bezugszeichen versehen. Die Heizkordel 2 weist allgemein eine Trägerkordel 4 aus einem expandierten PTFE auf, um die ein Widerstandselement 6 wendelförmig geführt ist. Das Widerstandselement 6 selbst besteht wiederum aus mehreren, im Ausführungsbeispiel drei nebeneinander unmittelbar aneinander anliegend angeordneten Widerstandsdrähten 8. Wie insbesondere aus der Querschnittsdarstellung der FIG 1A zu entnehmen ist, ist deren Durchmesser d um ein vielfaches kleiner als der Durchmesser D der Heizkordel 2. Der Durchmesser der Heizkordel 2 liegt vorzugsweise im Bereich von etwa 1 mm, also beispielsweise im Bereich von 0,6 bis 2 mm. Demgegenüber weisen die Widerstandsdrähte 8 einen Durchmesser d von nur einem Bruchteil eines Millimeters auf.

Die Trägerkordel 4 selbst ist wiederum aus einem in Längsrichtung um seine Längsachse in sich gedrehtes PTFE-Band ausgebildet. Wie aus FIG 1A und 1B zu entnehmen ist, ist die Trägerkordel 4 durch das Material und durch die Wicklung des Bandes ausreichend weich, so dass die einzelnen Widerstandsdrähte 8 quasi in den Außenumfang eingepresst sind.

Wie insbesondere aus der FIG 2 hervorgeht ist das Widerstandselement 6 unter einer Schlaglänge s um die Trägerkordel 4 gewickelt. Die Schlaglänge definiert in erster Näherung zugleich auch einen Wickelabstand a, welcher lediglich etwas geringer ist als die Schlaglänge s. Unter Schlaglänge s wird allgemein der Abstand in Längsrichtung verstanden, die zwei Wickelabschnitte des Widerstandselements 6 nach einer 360°-Umdrehung zueinander aufweisen.

Bei der Heizkordel 2 gemäß der FIG 2 sind in regelmäßigen periodischen Abständen Teilbereiche 10, sogenannte Kontaktierungsbereiche ausgebildet, bei denen der Wickelabstand zumindest von zwei benachbarten Wicklungen des Widerstandselements 6 auf null reduziert ist. Die Widerstandsdrähte 8 zweier benachbarter Abschnitte des Widerstandselements 6 liegen daher unmittelbar aneinander an. Alternativ können auch mehr als zwei Abschnitte des Widerstandselements unmittelbar aneinander angrenzend im Kontaktierungsbereich 10 um die Trägerkordel 4 gewickelt werden. Die Kontaktierungsbereiche 10 sind daher in einem definierten Rastermaß r angeordnet. Dieses liegt beispielsweise bei mehreren 10 cm bis hin zum Meterbereich. Vorzugsweise liegt das Rastermaß r bei 1 m. Die Länge l des Kontaktierungsbereichs liegt vorzugsweise im Bereich von wenigen cm, vorzugsweise im Bereich von etwa 5 cm. Die Anzahl der unmittelbar aneinander angrenzenden Wickelabschnitte des Widerstandselements 6 richten sich nach der gewünschten Länge des Kontaktierungsbereichs 10.

FiG 3 zeigt schließlich eine spezielle Ausgestaltung, bei der die Heizkordel 2 unmittelbar um einen Wischwasserschlauch 12 geführt ist. In FIG 3 ist hierbei eine Variante dargestellt, bei der die Heizkordel 2 zwischen einem Innenschlauch 12A und einen Außenschlauch 12B geführt ist. Alternativ besteht auch die Möglichkeit, dass auf den Außenschlauch 12B verzichtet ist. Insbesondere in diesem Fall ist die Heizkordel 2 selbst von einem Isoliermantel umgeben (hier nicht näher dargestellt).

### Bezugszeichenliste

- 2: Heizkordel
- 4: Trägerkordel
- 6: Widerstandselement
- 8: Widerstandsdrähte
- 10: Kontaktierungsbereich
- 12: Wischwasserschlauch
- d: Durchmesser Widerstandsdrähte
- D: Durchmesser Heizkordel
- s: Schlaglänge
- a: Wickelabstand
- r: Rastermaß
- I: Länge

## Patentansprüche

1. Heizkordel (2), insbesondere zur Beheizung von Scheibenwischwasser bei Kraftfahrzeugen, mit einem zentralen Trägerelement und mit einem darum gewickelten Widerstandselement (6),
**dadurch gekennzeichnet,**
**dass** das Trägerelement eine Trägerkordel (4) ist, die aus einem gewickelten PTFE-Band besteht.

2. Heizkordel (2) nach Anspruch 1,
**dadurch gekennzeichnet,**
**dass** das Widerstandselement (6) gebildet ist aus mehreren Widerstandsdrähten (8), die nebeneinander anliegend um die Trägerkordel (4) gewickelt sind.

3. Heizkordel (2) nach einem der vorhergehenden Ansprüche,
**dadurch gekennzeichnet,**
**dass** das Widerstandselement (6) mit einer Schlaglänge (s) um die Trägerkordel (4) gewickelt ist, die im Bereich von 1 bis 7 mm liegt.

4. Heizkordel (2) nach einem der vorhergehenden Ansprüche,
**dadurch gekennzeichnet,**
**dass** in Längsrichtung einander benachbarte Wendelabschnitte des Widerstandelements (6) zueinander einen Wickelabstand (a) aufweisen.

5. Heizkordel (2) nach Anspruch 4,
**dadurch gekennzeichnet,**
**dass** der Wickelabstand (a) im Bereich von 3 bis 7 mm liegt.

6. Heizkordel (2) nach Anspruch 4 oder 5,
**dadurch gekennzeichnet,**
**dass** der Wickelabstand (6) in Längsrichtung variiert.

7. Heizkordel (2) nach Anspruch 6,
**dadurch gekennzeichnet,**
**dass** der Widerstandsdraht (8) in einem Teilbereich (10), insbesondere einem endseitigen Kontaktierungsbereich einen verringerten Wickelabstand (a) aufweist.

8. Heizkordel (2) nach Anspruch 7,
**dadurch gekennzeichnet,**
**dass** im Teilbereich (10) der Wickelabstand (a) auf zumindest nahezu null reduziert ist.

9. Heizkordel (2) nach Anspruch 7 oder 8, **gekennzeichnet durch** periodisch wiederkehrende Teilbereiche (10) mit verringertem Wickelabstand (a).

10. Heizkordel (2) nach einem der Ansprüche 7 bis 9,
**dadurch gekennzeichnet,**
**dass** im Teilbereich (10) ein Kontaktierungselement, insbesondere ein Kontaktcrimp, angeschlagen ist.

11. Elektrische Heizvorrichtung, insbesondere für eine Wischwasserleitung bei einem Kraftfahrzeug, mit einer Heizkordel (2) nach einem der vorhergehenden Ansprüche.

12. Heizvorrichtung nach Anspruch 11, bei der die Heizkordel (2) in einem oder um einen Wischwasserschlauch (12) angeordnet ist.

13. Heizvorrichtung nach Anspruch 11 oder 12, bei der die Heizkordel (2) an einem Wischarm entlang geführt ist.

## Claims

1. Heating cord (2), in particular for heating windscreen wiping water in motor vehicles, having a central carrier element and having a resistance element (6) which is wound around the latter,
**characterized**
**in that** the carrier element is a carrier cord (4) which is composed of a wound PTFE ribbon.

2. Heating cord (2), according to Claim 1,
**characterized**
**in that** the resistance element (6) is formed from a plurality of resistance wires (8) which are wound bearing one against the other about the carrier cord (4).

3. Heating cord (2), according to one of the preceding claims,
**characterized**
**in that** the resistance element (6) is wound with a lay length (s) around the carrier cord (4) which is in the range from 1 to 7 mm.

4. Heating cord (2), according to one of the preceding claims,
**characterized**
**in that** coil sections of the resistance element (6) which are adjacent to one another in the longitudinal direction are at a winding distance (a) from one another.

5. Heating cord (2), according to Claim 4,
**characterized**
**in that** the winding distance (a) is in the range from 3 to 7 mm.

6. Heating cord (2), according to Claim 4 or 5,
**characterized**
**in that** the winding distance (6) varies in the longitudinal direction.

7. Heating cord (2), according to Claim 6,
**characterized**
**in that** the resistance wire (8) has a reduced winding distance (a) in a partial region (10), in particular an end-side contact-forming region.

8. Heating cord (2), according to Claim 7,
**characterized**
**in that** in the partial region (10) the winding distance (a) is reduced to at least virtually zero.

9. Heating cord (2), according to Claim 7 or 8,
**characterized**
**by** periodically recurring partial regions (10) with a reduced winding distance (a).

10. Heating cord (2), according to one of Claims 7 to 9,
**characterized**
**in that** a contact-forming element, in particular a contact crimp, is fastened in the partial region (10).

11. Electric heating device, in particular for a wiping water line in a motor vehicle, having a heating cord (2) according to one of the preceding claims.

12. Heating device according to Claim 11, in which the heating cord (2) is arranged in or around a wiping water hose (12).

13. Heating device according to Claim 11 or 12, in which the heating cord (2) is guided along a wiping arm.

## Revendications

1. Cordon chauffant (2), notamment destiné à chauffer l'eau de lave-glace sur les véhicules automobiles, comprenant un élément porteur central et un élément résistif (6) bobiné autour de celui-ci, **caractérisé en ce que** l'élément porteur est un cordon porteur (4) qui est constitué d'une bande en Téflon bobinée.

2. Cordon chauffant (2) selon la revendication 1, **caractérisé en ce que** l'élément résistif (6) est constitué de plusieurs fils résistifs (8) qui sont bobinés autour du cordon porteur (4) en reposant les uns à côté des autres.

3. Cordon chauffant (2) selon l'une des revendications précédentes, **caractérisé en ce que** l'élément résistif (6) est bobiné autour du cordon porteur (4) avec un pas de câblage qui est compris dans la plage de 1 à 7 mm.

4. Cordon chauffant (2) selon l'une des revendications précédentes, **caractérisé en ce que** les portions de spire de l'élément résistif (6) qui sont voisines les unes des autres dans le sens de la longueur présentent un écart de bobinage (a) entre elles.

5. Cordon chauffant (2) selon la revendication 4, **caractérisé en ce que** l'écart de bobinage (a) est compris dans la plage de 3 à 7 mm.

6. Cordon chauffant (2) selon la revendication 4 ou 5, **caractérisé en ce que** l'écart de bobinage (6) varie dans le sens de la longueur.

7. Cordon chauffant (2) selon la revendication 6, **caractérisé en ce que** le fil résistif (8) présente un écart de bobinage (a) réduit dans une zone partielle (10), notamment une zone de mise en contact du côté de l'extrémité.

8. Cordon chauffant (2) selon la revendication 7, **caractérisé en ce que** dans la zone partielle (10), l'écart de bobinage (a) est réduit à une valeur quasiment nulle.

9. Cordon chauffant (2) selon la revendication 7 ou 8, **caractérisé par** des zones partielles (10) à écart de bobinage (a) réduit qui se répètent périodiquement.

10. Cordon chauffant (2) selon l'une des revendications 7 à 9, **caractérisé en ce qu'**un élément de mise en contact, notamment un contact à sertir, est fixé dans la zone partielle (10).

11. Dispositif chauffant électrique, notamment pour une conduite à eau de lavage sur un véhicule automobile, comprenant un cordon chauffant (2) selon l'une des revendications précédentes.

12. Dispositif chauffant selon la revendication 11, dans lequel le cordon chauffant (2) est disposé dans un ou autour d'un tuyau à eau de lavage (12).

13. Dispositif chauffant selon la revendication 11 ou 12, dans lequel le cordon chauffant (2) est posé le long d'un bras de balais d'essuie-glace.
